# EUROPEAN PATENT APPLICATION

(11) **EP 3 719 918 A1**
(43) Date of publication of application: **07.10.2020**
(21) Application number: 18883760.3
(22) Date of filing: 06.11.2018
(51) Int. Cl.: H01M 10/613

(54) **CHARGING PILE**

(30) Priority: 01.12.2017 CN 201711250687
(71) Applicant: Tsinghua University, Haidian District Beijing 100084 (CN)
(72) Inventor: LU, Languang, Beijing 100084 (CN); LI, Yalun, Beijing 100084 (CN); OUYANG, Minggao, Beijing 100084 (CN); DU, Jiuyu, Beijing 100084 (CN); LI, Jianqiu, Beijing 100084 (CN); FENG, Xuning, Beijing 100084 (CN); HAN, Xuebing, Beijing 100084 (CN)
(74) Representative: Balder IP Law, S.L.
(86) International application number: PCT/CN2018/114032
(87) International publication number: WO 2019/105185

(57) **Abstract**

A charging apparatus is provided in the present disclosure. The charging apparatus includes a heat exchange pipeline, and a refrigerant liquid output pipe and a refrigerant liquid input pipe which are connected to the heat exchange pipe. The charging apparatus can ensure a vehicle battery can be charged at an optimal temperature range, thereby reducing a charging time of the charging apparatus.

## Description

### CROSS-REFERENCE TO RELATED APPLICATIONS

This application claims the benefit of Chinese Application No. 201711250687.4, filed on December 01, 2017, and entitled "Charging Apparatus", the entire content of which is incorporated herein by reference.

### FIELD

The present disclosure relates to the field of power batter charging, in particular to a charging apparatus.

### BACKGROUND

With the developments of science, technology and new energy, full electric vehicles have been promoted and applied more and more due to their unique advantages. The full electric vehicle uses a power battery with low internal resistance and minor temperature increase under vehicle operation conditions. If an initial temperature of the battery is controlled within an appropriate range, a final temperature of the battery in operation will not be too high, thereby ensuring the durability and the safety of the battery.

Fast charge and super charge have become future development trends with the users' increasing requirements on charging time. Both high and low temperatures can affect the safety and durability of the battery, which is especially prominent during the fast charge, making thermal management necessary. However, the design of the charging apparatus in the related art has a long charging time, and it is difficult to meet the demands of the thermal management of the power battery with high-rate charging and low-temperature rapid heating.

### SUMMARY

In view of this, it is necessary to provide a charging apparatus capable of fast charging, to solve the problems in the conventional charging apparatus that the charging time is relatively long, and it is difficult to meet the demands for high-rate charging and low-temperature rapid heating.

An embodiment of a charging apparatus includes a refrigerant liquid heat exchange device. The refrigerant liquid heat exchange device includes:
a heat exchange pipeline; and
a refrigerant liquid output pipe and a refrigerant liquid input pipe which are connected to the heat exchange pipeline, the refrigerant liquid output pipe and the refrigerant liquid input pipe being configured to respectively communicate with a cooling pipeline of a vehicle battery, so as to allow the heat exchange pipeline and the cooling pipeline of the vehicle battery to form a loop.

A charging apparatus provided in an embodiment includes a refrigerant liquid heat exchange device. The refrigerant liquid heat exchange device includes:
a heat exchange pipeline;
a refrigerant liquid output pipe and a refrigerant liquid input pipe which are connected to the heat exchange pipeline, the refrigerant liquid output pipe and the refrigerant liquid input pipe being configured to respectively communicate with a cooling pipeline of a vehicle battery, so as to allow the heat exchange pipeline and the cooling pipeline of the vehicle battery to form a loop;
a charging device electrically connected to the signal controller; and
a charging port electrically connected to the charging device and configured to be electrically connected to a vehicle battery to charge the vehicle battery.

The charging apparatus provided in the present disclosure includes a refrigerant liquid heat exchange device. The refrigerant liquid heat exchange device includes a heat exchange pipeline, and a refrigerant liquid output pipe and a refrigerant liquid input pipe which are connected to the heat exchange pipeline. The refrigerant liquid output pipe and the refrigerant liquid input pipe are configured to respectively communicate with a cooling pipeline of a vehicle battery, so as to allow the heat exchange pipeline and the cooling pipeline of the vehicle battery to form a loop. The refrigerant liquid heat exchange device can communicate with the cooling pipeline of the vehicle battery via the refrigerant liquid output pipe and the refrigerant liquid input pipe to form the loop of the refrigerant liquid. A battery pack of a full electric vehicle can be heated or cooled by the refrigerant liquid heat exchange device of the charging apparatus via the loop of the refrigerant liquid to ensure that the vehicle battery can be charged at an optimal temperature range. When charging the full electric vehicle, as the charging apparatus is equipped with the refrigerant liquid heat exchange device, the charging apparatus can ensure that the power battery is charged at an optimal temperature according to an environmental temperature, a current temperature of the power battery, and different charge requirements of the power batteries. Thus, the charging apparatus can meet the demand of the thermal management of the vehicle battery and can ensure that an initial discharge temperature of the vehicle battery is at an appropriate range, thereby accelerating the charging operation of the charging apparatus and reducing the charging time of the charging apparatus.

### BRIEF DESCRIPTION OF THE DRAWINGS

The drawings to be used in the description of the embodiments or the prior art are described briefly as follows, to more clearly describe the technical solutions according to the embodiments of the present disclosure or according to the prior art. It is apparent that the drawings in the following description are only some embodiments of the present disclosure. Other drawings may be obtained by those skilled in the art according to these drawings without any creative work.
FIG. 1 is a schematic view of a charging apparatus in operation state provided in the present disclosure.
FIG. 2 is a schematic structural view of a first port of the charging apparatus provided in the present disclosure.
FIG. 3 is a schematic structural view of a second port of the charging apparatus provided in the present disclosure.
FIG. 4 is a schematic view showing an internal structure of the charging apparatus in operation state provided in the present disclosure.

### Description of Reference Numeral

charging apparatus 100, refrigerant liquid heat exchange device 110, signal control device 120, charging device 130, signal controller 102, refrigerant liquid pump 105, heat exchanger 106, cooling fan 107, heat dissipation water tank 108, auxiliary liquid reservoir 109, signal circuit 121, heat exchange pipeline 111, first port 210, second port 220, third port 230, charging port 240, refrigerant liquid output pipe 212, refrigerant liquid input pipe 222, first signal receiving end 214, second signal receiving end 224, first signal line switch 401, second signal line switch 402.

### DETAILED DESCRIPTION

For a clear understanding of the objects, technical features, and effects of the present disclosure, specific embodiments of the present disclosure will now be described in detail with reference to the accompanying drawings. It is to be understood that the following description is merely exemplary embodiment of the present disclosure, and is not intended to limit the scope of the present disclosure.

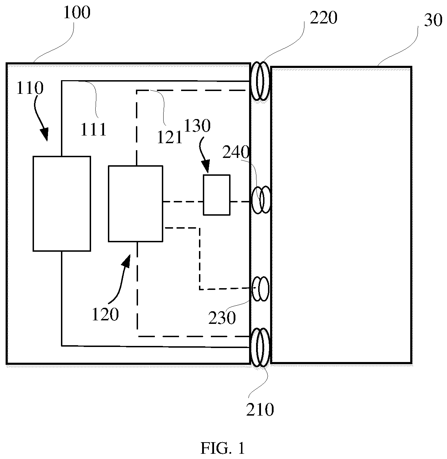

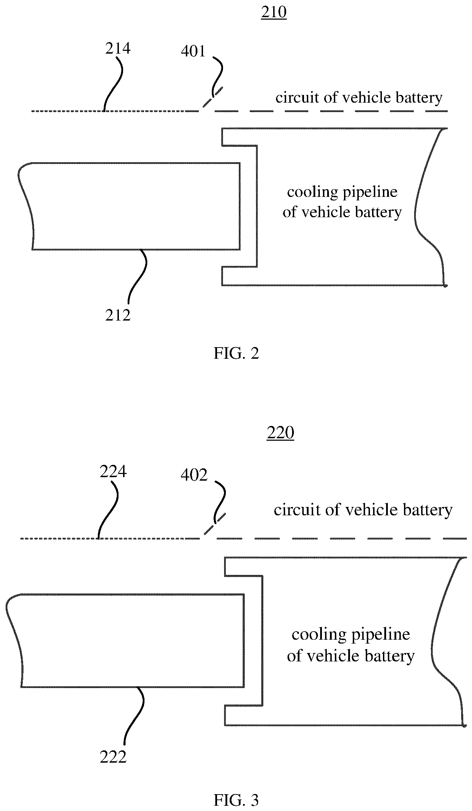

Referring to FIGS. 1-3, a charging apparatus 100 is provided in the present disclosure. The charging apparatus 100 includes a refrigerant liquid heat exchange device 110. The refrigerant liquid heat exchange device 110 includes a heat exchange pipeline 111, and a refrigerant liquid output pipe 212 and a refrigerant liquid input pipe 222 connected to the heat exchange pipeline 111. When the charging apparatus 100 is in operation, the refrigerant liquid output pipe 212 and the refrigerant liquid input pipe 222 are configured to respectively communicate with a cooling pipeline of a vehicle battery 30, to allow the heat exchange pipeline 111 and the cooling pipeline of the vehicle battery to form a loop.

When the charging apparatus 100 is in operation, the refrigerant liquid output pipe 212 is configured to communicate with the cooling pipeline of the vehicle battery 30 to output a refrigerant liquid into the cooling pipeline of the vehicle battery 30. The refrigerant liquid input pipe 222 is configured to communicate with the cooling pipeline of the vehicle battery 30 to input the refrigerant liquid from the cooling pipeline of the vehicle battery 30 into the heat exchange pipeline 111. The refrigerant liquid heat exchange device 110 can communicate with the cooling pipeline of the vehicle battery 30 via the refrigerant liquid output pipe 212 and the refrigerant liquid input pipe 222 to form the loop of the refrigerant liquid. A battery pack of a full electric vehicle can be heated or cooled by the refrigerant liquid heat exchange device 110 of the charging apparatus 100 via the loop of the refrigerant liquid to ensure that the vehicle battery 30 can be charged at an optimal temperature range.

When charging the full electric vehicle, as the charging apparatus 100, is equipped with the refrigerant liquid heat exchange device 110, charging apparatus 100 can ensure that the power battery is charged at a most appropriate temperature according to an environmental temperature, a current temperature of the power battery, and different charge requirements of the power batteries. Thus, the charging apparatus 100 can meet the demand of the thermal management of the vehicle battery 30 and can ensure that an initial discharge temperature of the vehicle battery 30 is in an appropriate range, thereby accelerating the charging operation of the charging apparatus 100 and reducing the charging time of the charging apparatus 100.

In an embodiment, the charging apparatus 100 further includes a signal control device 120. The signal control device 120 includes a signal circuit 121, a first signal receiving end 214 electrically connected to the signal circuit 121, and a second signal receiving end 224 electrically connected to the signal circuit 121. When the charging apparatus 100 is in operation, the first signal receiving end 214 is electrically connected to a circuit of the vehicle battery 30, and the second signal receiving end 224 is electrically connected to the circuit of the vehicle battery 30. When the charging apparatus 100 is in operation, while the refrigerant liquid output pipe 212 and the refrigerant liquid input pipe 222 are respectively in communication with the cooling pipeline of the vehicle battery 30 and the loop is formed, the first signal receiving end 214 and the second signal receiving end 224 are respectively connected to the circuit of the vehicle battery 30 via wires to transmit signals. As such, the signal control device 120 will receive a signal indicating that the cooling pipeline is in communication and then control the charging and discharging operation of the charging apparatus 100 to meet the demand of the thermal management of the power battery.

In an embodiment, a first signal line switch 401 is disposed at a joint of the first signal receiving end 214 for electrically connecting with the circuit of the vehicle battery 30. A second signal line switch 402 is disposed at a joint of the second signal receiving end 224 for electrically connecting with the circuit of the vehicle battery 30. The charging apparatus 100 further includes a first port 210 and a second port 220. The first port 210 includes the refrigerant liquid output pipe 212, the first signal line switch 401, and the first signal receiving end 214. The second port 220 includes the refrigerant liquid input pipe 222, the second signal line switch 402, and the second signal receiving end 224. In the operation of the charging apparatus 100, while the refrigerant liquid output pipe 212 communicates with the cooling pipeline of the vehicle battery 30, the first signal line switch 401 is closed; and while the refrigerant liquid input pipe 222 communicates with the cooling pipeline of the vehicle battery 30, the second signal line switch 402 is closed. Therefore, whether the loop is formed with the heat exchange pipeline 111 and the cooling pipeline of the vehicle battery 30 or not can be judged by measuring whether the first signal line switch 401 and the second signal line switch 402 are closed or not.

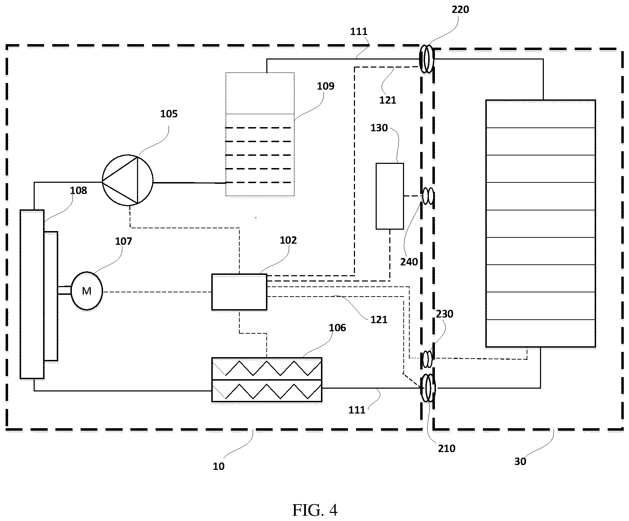

Referring to FIG. 4, in an embodiment, the signal control device 120 further includes a signal controller 102. The signal controller 102 is electrically connected to the signal circuit 121 to measure whether the charging apparatus 100 and the cooling pipeline of the vehicle battery 30 are in communication or not. The signal controller 102 is electrically connected to the signal circuit 121 via a wire. The signal circuit 121 is respectively and electrically connected to the first signal receiving end 214 and the second signal receiving end 224 via wires. Therefore, when the first signal line switch 401 and the second signal line switch 402 are closed, the signal controller 102 can receive the signal indicating that the loop has been formed with the heat exchange pipeline 111 and the cooling pipeline of the vehicle battery 30 via the wires.

In an embodiment, the refrigerant liquid heat exchange device 110 further includes an auxiliary liquid reservoir 109, a refrigerant liquid pump 105, a heat dissipation water tank 108, and a heat exchanger 106. An orifice of the auxiliary liquid reservoir 109 is in communication with the refrigerant liquid input pipe 222 via a pipe, so as to be capable of communicating with the cooling pipeline of the vehicle battery 30. An orifice of the refrigerant liquid pump 105 is in communication with another orifice of the auxiliary liquid reservoir 109 via a pipe. An orifice of the heat dissipation water tank 108 is in communication with another orifice of the refrigerant liquid pump 105 via a pipe. An orifice of the heat exchanger 106 is in communication with another orifice of the heat dissipation water tank 108 via a pipe. Another orifice of the heat exchanger 106 is communication with the refrigerant liquid output pipe 212 so as to be capable of communicating with the cooling pipeline of the vehicle battery 30. When the charge apparatus 100 is in operation, the charge apparatus 100 has a function as that of a battery pack thermal management system in an vehicle, shifting the refrigerant liquid pump 105, the heat dissipation water tank 108, the auxiliary liquid reservoir 109, and the heat exchanger 106 out from the vehicle, thereby achieving a universal cooling effect and a high power cooling effect for different types of vehicles and batteries. The charge apparatus 100 allows a reduction in weight of a thermal management device in the vehicle and allows the thermal management device in the vehicle to be simplified, thereby decreasing a cost of a power battery box and increasing an energy density of the battery pack, which is beneficial to increase a driving range of the electric vehicle.

When the charging apparatus 100 is in operation, a heat exchange loop can be formed by the auxiliary liquid reservoir 109, the refrigerant liquid pump 105, the heat dissipation water tank 108, and the heat exchanger 106 as well as the cooling pipeline of the vehicle battery 30. Two ends of the auxiliary liquid reservoir 109 are respectively in communication with the refrigerant liquid pump 105 and the refrigerant liquid input pipe 222 via pipes. The auxiliary liquid reservoir 109 is mainly used to achieve functions of expansion storage, and supplement of the refrigerant liquid. When a temperature of the liquid medium in the pipe is increased, a volume of the liquid can be expanded, and the expanded volume of the liquid can be taken by the auxiliary liquid reservoir 109, i.e., a part of the liquid medium can flow into the auxiliary liquid reservoir 109. When the temperature of the liquid medium in the pipe is decreased, the volume can be shrunk, i.e., the liquid amount in the liquid loop can be reduced, and a part of the liquid will flow back from the auxiliary liquid reservoir 109 into the loop to supply the liquid amount in the liquid loop. One end of the heat dissipation water tank 108 is connected to the refrigerant liquid pump 105 via a pipe, and the other end of the heat dissipation water tank 108 is connected to the heat exchanger 106 via a pipe. When the vehicle battery 30 achieves an optimal temperature, the signal control device 120 controls the refrigerant liquid pump 105 to stop working, so as to control the refrigerant liquid heat exchange device 110 to stop working, at which the charging operation on the vehicle battery 30 can be initiated.

In an embodiment, the refrigerant liquid heat exchange device 110 further includes a cooling fan 107 fixed on the heat dissipation water tank 108 and electrically connected to the signal controller 102 to assist the heat dissipation water tank 108 to dissipate heat. When the charging apparatus 100 is in operation, if the battery temperature is relatively high, then the cooling fan 107 can assist the heat dissipation water tank 108 to cool the liquid medium, thereby better controlling the operating temperature of the vehicle battery 300. The signal controller 102 can control the operation and be electrically connected to the cooling fan 107 via a wire. If the temperature of the vehicle battery 30 is too high and reaches a preset temperature for the cooling fan 107 to be initiated, then the signal controller 102 controls the cooling fan 107 to be initiated to assist the heat dissipation water tank 108 to cool the liquid medium.

In an embodiment, the signal controller 102 is electrically connected to the refrigerant liquid pump 105. If the vehicle battery 30 achieves the optimal temperature, then the signal controller 102 controls the refrigerant liquid pump 105 to stop working, so as to control the refrigerant liquid heat exchange device 110 to stop working, at which the charging operation on the vehicle battery 30 can be initiated.

In an embodiment, the signal controller 102 is electrically connected to the heat exchanger 106. When the charging apparatus 100 is in operation, if the vehicle battery 30 is not at the optimal temperature for charging, then the signal controller 102 can control the heat exchanger 106 to perform the heating or cooling operation to ensure the vehicle battery 30 is within the optimal operating temperature extent and maintained in a reasonable operating temperature range.

In an embodiment, the charging apparatus 100 further includes a third port 230 electrically connected to the signal controller 102 and to the vehicle battery 30 to acquire the temperature of the vehicle battery 30. When the charging apparatus 100 is in operation, the signal controller 102 acquires the temperature of the liquid medium in the cooling pipeline of the vehicle battery 30, and can control operating states of the refrigerant liquid heat exchange device 110 and the signal control device 120, to ensure that the vehicle battery 30 is at the optimal temperature for charging all the time.

In an embodiment, the heat exchange pipeline 111 is a liquid cooling pipeline. Water is filled in the liquid cooling pipeline. The water can absorb a lot of heat without causing a significant change in its temperature due to its ultrahigh specific heat capacity, so that the temperature can be controlled well. Generally, an immersing cooling manner needs to use an electrically insulating and flame retardant liquid, and thus has a high cost, while the liquid cooling pipe has a relatively low cost, thereby reducing the cost.

In an embodiment, the charging apparatus 100 further includes a charging device 130 and a charging port 240. The charging port 240 is electrically connected to the charging device 130 and is configured to be connected to the vehicle battery 30 via a wire to charge the vehicle battery 30. When the charging apparatus 100 is in operation, if the vehicle battery 30 is at the optimal temperature for charging, then the charging device 130 is started to fast charge the vehicle battery 30.

The first port 210 includes the refrigerant liquid output pipe 212, the first signal line switch 401, and the first signal receiving end 214. The second port 220 includes the refrigerant liquid input pipe 222, the second signal line switch 402, and the second signal receiving end 224. As such, the port used for connecting with the cooling system of the vehicle battery 30 and the information interaction port are provided in the charging apparatus 100. When the charging apparatus 100 is in operation, the various components of the charging apparatus 100 can cooperate with each other to heat or cool the vehicle battery 30, thereby ensuring that the vehicle battery 30 can work at an appropriate temperature all the time under different working conditions.

When charging the vehicle battery 30 via the charging apparatus 100, a charge circuit is firstly formed by connecting the vehicle battery 30 with the charging apparatus 100 via a wire, i.e., the charging port 240 is electrically connected to the vehicle battery 30 via the wire. Then the cooling loop is formed with the vehicle battery 30 and the charging apparatus 100 via the connections of the first port 210 and the second port 220. The refrigerant liquid is pumped from the auxiliary liquid reservoir 109 into the cooling loop via the refrigerant liquid pump 105 to allow the liquid cooling loop in the vehicle battery 30 to be filled with the refrigerant liquid. Then the signal controller 102 acquires the temperature of the vehicle battery 30 via a sensor, and controls the cooling fan 107 or the heat exchanger 106 to pre-cool or pre-heat the vehicle battery 30 before charging the vehicle battery 30, thereby ensuring that the battery is at an optimal initial charge temperature. Then the signal controller 102 regulates output powers of the cooling fan 107, the heat exchanger 106, and the refrigerant liquid pump 105 according to a required charge rate of the battery, a type and parameters of the battery, and a real-time temperature in the vehicle battery 30 to ensure that the vehicle battery 30 can be charged at an appropriate temperature range. When the vehicle battery 30 is at the appropriate temperature range for charging, the charging device 130 is started to fast charge the vehicle battery 30. After the charge, the battery is at an optimal initial working temperature.

When the charging process for the vehicle battery 30 is finished, the signal controller 102 controls the refrigerant liquid pump 105 to pump the refrigerant liquid from the vehicle battery 30 back into the auxiliary liquid reservoir 109. Finally, the first port 210 and the second port 220 are disconnected. Then the vehicle battery 30 can be kept at a reasonable temperature range by natural cooling when the full electric vehicle is running.

In an embodiment, when the vehicle battery 30 is in the fast charge state, the vehicle battery 30 is charged at a high charging rate, for example, in a range from 1C to 10C, and the power battery can produce a lot of heat during the charging. In this case, a charge circuit is firstly formed by connecting the vehicle battery 30 with the charging apparatus 100 via a wire, i.e., the charging port 240 is electrically connected to the vehicle battery 30 via the wire. Then the cooling loop is formed with the vehicle battery 30 and the charging apparatus 100 via the connections of the first port 210 and the second port 220. The signal controller 102 controls the refrigerant liquid pump 105 to pump the liquid medium from the auxiliary liquid reservoir 109 into the cooling loop when a signal indicating that the cooling loop has been formed is received by the signal controller 102. The signal controller 102 can estimate the heat produced by the vehicle battery 30 according to the type of the vehicle battery 30, battery parameters, and the preset charging rate, and the estimated heat can be used as a feedforward control parameter. The signal controller 102 acquires the real-time temperature of the vehicle battery 30 at this time according to a signal indicating the temperature of the vehicle battery 30, and the acquired temperature is used as a feedback control parameter. The signal controller 102 can control the operating powers of the heat dissipation water tank 108, the refrigerant liquid pump 105, and the heat exchanger 106 according to the feedback control parameter to ensure that the vehicle battery 30 is charged at the optimal charge temperature range throughout the fast charge.

In an embodiment, when the vehicle battery 30 is in a low temperature environment, i.e., when the vehicle battery 30 is placed in the low temperature environment before charging, an initial charge temperature of the vehicle battery 30 may be -40 °C-10 °C. At this time, if the vehicle battery 30 is charged immediately, the safety and the service life of the vehicle battery 30 would be adversely affected. Therefore, in such environment, the charge circuit is firstly formed by connecting the vehicle battery 30 with the charging apparatus 100 via a wire, i.e., the charging port 240 is electrically connected to the vehicle battery 30 via the wire. Then the cooling loop is formed with the vehicle battery 30 and the charging apparatus 100 via the connections of the first port 210 and the second port 220. The signal controller 102 controls the refrigerant liquid pump 105 to pump the liquid medium from the auxiliary liquid reservoir 109 into the cooling loop when a signal indicating that the cooling loop has been formed is received by the signal controller 102. The signal controller 102 sends an initial charging time delay signal when a signal indicating the low temperature of the vehicle battery 30 is received by the signal controller 102, so that the charging operation of the charging apparatus 100 is provisionally postponed. Then the signal controller 102 controls the heat exchanger 106 and the refrigerant liquid pump 105 to fast heat the vehicle battery 30. When the temperature in the vehicle battery 30 is in the appropriate initial charge temperature, for example, 20 °C-30 °C, the heating is stopped, and the signal controller 102 sends an initial charging time delay revocation signal. When the vehicle battery 30 is in the appropriate initial charge temperature range, the charging device 130 starts to fast charge the vehicle battery 30. The operation mode of the charging apparatus 100 is the same as the operation mode when the vehicle battery 30 is in the fast charge state.

In an embodiment, before the charging apparatus 100 and the vehicle battery 30 are disconnected, the signal controller 102 regulates the temperature of the vehicle battery 30 to a most appropriate initial usage temperature, typically, 25 °C, by regulating the operating powers of the cooling fan 107, the refrigerant liquid pump 105, and the heat exchanger 106 according to the temperature of the vehicle battery 30. At the initial usage temperature, the power battery can work in a reasonable operating temperature range, typically, 10°C to 55 °C, via natural convective heat transfer throughout the working process. As such, after the charging apparatus 100 and the vehicle battery 30 are disconnected, the vehicle battery 30 can be in a typical operating state to drive the electric vehicle.

In an embodiment, when the electric vehicle is stalled out and needs to be charged during travel, the first port 210, the second port 220, the third port 230, and the charging port 240 are firstly connected. The signal controller 102 acquires the temperature of the vehicle battery 30 via the third port 230. The signal controller 102 controls the refrigerant liquid pump 105 to pump the liquid medium from the auxiliary liquid reservoir 109 into the cooling loop when a signal indicating that the first port 210 and the second port 220 have been connected is detected by the signal controller 102. The signal controller 102 controls the heat exchanger 106 and the refrigerant liquid pump 105 to fast cool the vehicle battery 30. The signal controller 102 acquires the real-time temperature of the vehicle battery 30 at this time according to the signal indicating the temperature of the vehicle battery 30, and the acquired temperature is used as a feedback control parameter. The signal controller 102 acquires the temperature in the vehicle battery 30; and when the temperature in the vehicle battery 30 is in the appropriate initial charge temperature, e.g., 20 °C to 30 °C, the cooling process is terminated. The charging device 130 charges the vehicle battery 30 via the charging port 240 when the signal controller 102 receives a charging signal. Since the charge of the vehicle battery 30 via the charging apparatus 100 is in the appropriate temperature status all the time, the charging time is reduced, thereby solving the long charging time problem of the conventional charging apparatus. Moreover, the demands for the high rate charge and the fast heating at low temperature can be satisfied. Therefore, the charging apparatus capable of achieving the fast charge is provided herein.

Unless otherwise defined, all terms herein, including technical and scientific terms, shall have the same meaning as commonly accepted by a person skilled in the art to which this disclosure belongs. Such terms, as used herein, are for the purpose of describing exemplary examples of, and without limiting, the present disclosure. The term "and/or" as used herein refers to any and all combinations of one or more items recited.

Those skilled in the art can apparently appreciate upon reading the disclosure of this application that the respective technical features involved in the respective examples can be combined arbitrarily between the respective example can also be combined arbitrarily as long as they have no collision with each other. For the purpose of simplicity, not all combinations are described herein. However, such combination should all be considered as within the scope of the present disclosure given that there is no collision.

## Claims

1. A charging apparatus **characterized by** comprising a refrigerant liquid heat exchange device (110), the refrigerant liquid heat exchange device (110) comprising:
a heat exchange pipeline (111); and
a refrigerant liquid output pipe (212) and a refrigerant liquid input pipe (222) connected to the heat exchange pipeline (111), the refrigerant liquid output pipe (212) and the refrigerant liquid input pipe (222) being configured to respectively communicate with a cooling pipeline of a vehicle battery, so as to allow the heat exchange pipeline (111) and the cooling pipeline of the vehicle battery to form a loop.

2. The charging apparatus of the claim 1, **characterized by** further comprising a signal control device (120) configured to be electrically connected to a circuit of the vehicle battery.

3. The charging apparatus of the claim 2, **characterized in that** the signal control device (120) comprises:
a signal circuit (121);
a first signal receiving end (214) electrically connected to the signal circuit (121), the first signal receiving end (214) being configured to be electrically connected to the circuit of the vehicle battery; and
a second signal receiving end (224) electrically connected to the signal circuit (121), the second signal receiving end (224) being configured to be electrically connected to the circuit of the vehicle battery.

4. The charging apparatus of the claim 3, **characterized in that** a first signal line switch (401) is disposed at a joint of the first signal receiving end (214) for electrically connecting with the circuit of the vehicle battery, and a second signal line switch (402) is disposed at a joint of the second signal receiving end (224) for electrically connecting with the circuit of the vehicle battery.

5. The charging apparatus of the claim 3, **characterized in that** the signal control device (120) further comprises a signal controller (102) electrically connected to the signal circuit (121) and configured to measure whether the charging apparatus (100) is in communication with the cooling pipeline of the vehicle battery or not.

6. The charging apparatus of the claim 1, **characterized in that** the refrigerant liquid heat exchange device (110) further comprises an auxiliary liquid reservoir (109), and an orifice of the auxiliary liquid reservoir (109) is in communication with the refrigerant liquid input pipe (222) via a pipe so as to be capable of communicating with the cooling pipeline of the vehicle battery.

7. The charging apparatus of the claim 6, **characterized in that** the refrigerant liquid heat exchange device (110) further comprises a refrigerant liquid pump (105), and an orifice of the refrigerant liquid pump (105) is in communication with another orifice of the auxiliary liquid reservoir (109) via a pipe.

8. The charging apparatus of the claim 7, **characterized in that** the refrigerant liquid heat exchange device (110) further comprises a heat dissipation water tank (108), and an orifice of the heat dissipation water tank (108) is in communication with another orifice of the refrigerant liquid pump (105) via a pipe.

9. The charging apparatus of the claim 8, **characterized in that** the refrigerant liquid heat exchange device (110) further comprises a heat exchanger (106), an orifice of the heat exchanger (106) is communication with another orifice of the heat dissipation water tank (108), and another orifice of the heat exchanger (106) is communication with the refrigerant liquid output pipe (212) via a pipe so as to be capable of communicating with the cooling pipeline of the vehicle battery.

10. The charging apparatus of the claim 8, **characterized in that** the refrigerant liquid heat exchange device (110) further comprises a cooling fan (107) electrically connected to the signal controller (102) and fixed on the heat dissipation water tank (108) to assist the heat dissipation water tank (108) to dissipate heat.

11. The charging apparatus of the claim 5, **characterized in that** the signal controller (102) is electrically connected to the refrigerant liquid pump (105).

12. The charging apparatus of the claim 5, **characterized in that** the signal controller (102) is electrically connected to the heat exchanger (106).

13. The charging apparatus of the claim 5, **characterized by** further comprising a third port (230) electrically connected to the signal controller (102) and configured to be electrically connected to the vehicle battery to acquire a temperature of the vehicle battery.

14. The charging apparatus of the claim 1, **characterized in that** the heat exchange pipeline (111) is a liquid cooling pipeline.

15. A charging apparatus, **characterized by** comprising a refrigerant liquid heat exchange device (110) comprising:
a heat exchange pipeline (111);
a refrigerant liquid output pipe (212) and a refrigerant liquid input pipe (222) connected to the heat exchange pipeline (111), the refrigerant liquid output pipe (212) and the refrigerant liquid input pipe (222) being configured to respectively communicate with a cooling pipeline of a vehicle battery to allow the heat exchange pipeline (111) and the cooling pipeline of the vehicle battery to form a loop;
a charging device (130) electrically connected to the signal controller (102); and
a charging port (240) electrically connected to the charging device (130) and configured to be electrically connected to the vehicle battery to charge the vehicle battery.

16. The charging apparatus of the claim 15, **characterized in that** the charging apparatus 100 further comprises a signal control device (120), the signal control device (120) comprises:
a signal circuit (121);
a first signal receiving end (214) electrically connected to the signal circuit (121), the first signal receiving end (214) being configured to be electrically connected to the circuit of the vehicle battery; and
a second signal receiving end (224) electrically connected to the signal circuit (121), the second signal receiving end (224) being configured to be electrically connected to the circuit of the vehicle battery.

17. The charging apparatus of the claim 16, **characterized in that** a first signal line switch (401) is disposed at a joint of the first signal receiving end (214) for electrically connecting with the circuit of the vehicle battery, and a second signal line switch (402) is disposed at a joint of the second signal receiving end (224) for electrically connecting with the circuit of the vehicle battery.

18. The charging apparatus of the claim 16, **characterized in that** the signal control device (120) further comprises a signal controller (102) electrically connected to the signal circuit (121) and configured to measure whether the charging apparatus (100) is in communication with the cooling pipeline of the vehicle battery or not.

19. The charging apparatus of the claim 15, **characterized in that** the refrigerant liquid heat exchange device (110) further comprises:
an auxiliary liquid reservoir (109), an orifice of the auxiliary liquid reservoir (109) being in communication with the refrigerant liquid input pipe (222) via a pipe so as to be capable of communicating with the cooling pipeline of the vehicle battery;
a refrigerant liquid pump (105), an orifice of the refrigerant liquid pump (105) being in communication with another orifice of the auxiliary liquid reservoir (109) via a pipe;
a heat dissipation water tank (108), an orifice of the heat dissipation water tank (108) being in communication with another orifice of the refrigerant liquid pump (105) via a pipe; and
a heat exchanger (106), an orifice of the heat exchanger (106) being in communication with another orifice of the heat dissipation water tank (108), and another orifice of the heat exchanger (106) being in communication with the refrigerant liquid output pipe (212) via a pipe so as to be capable of communicating with the cooling pipeline of the vehicle battery.

20. The charging apparatus of the claim 19, **characterized in that** the refrigerant liquid heat exchange device (110) further comprises a cooling fan (107) electrically connected to the signal controller (102) and fixed on the heat dissipation water tank (108) to assist a heat dissipation of the heat dissipation water tank (108).
